# FASCICULE DE BREVET EUROPEEN

(11) **EP 0 576 334 B1**
(45) Date de publication et mention de la délivrance du brevet: **10.01.1996**
(21) Numéro de dépôt: 93401566.0
(22) Date de dépôt: 18.06.1993
(51) Int. Cl.: F02D 41/06

(54) **Procédé de repérage cylindres pour le pilotage d'un système d'injection électronique d'un moteur à combustion interne**
Verfahren zur Zylinderidentifikation für die Steuerung eines elektronischen Einspritzsystems eines Verbrennungsmotors
Cylinder discriminating method for the controlling of an electronic injection system of an internal combustion engine

(30) Priorité: 23.06.1992 FR 9207622
(43) Date de publication de la demande: 29.12.1993
(73) Titulaire: REGIE NATIONALE DES USINES RENAULT S.A., F-92109 Boulogne Billancourt (FR)
(72) Inventeur: Petitbon, Armelle, F-75011 Paris (FR); Hornewer, Jean-Marc, F-95800 Cergy le Haut (FR)

(56) Documents cités:
- WO-A-91/11599
- DE-A- 3 933 826
- PATENT ABSTRACTS OF JAPAN vol. 13, no. 489 (M-888) 7 Novembre 1989 & JP-A-11 95 975 (MITSUBISHI MOTORS) 7 Août 1989
- PATENT ABSTRACTS OF JAPAN vol. 12, no. 91 (M-679) 24 Mars 1988 & JP-A-62 228 640 (MITSUBISHI MOTORS) 7 Octobre 1987

## Description

La présente invention concerne un procédé permettant de générer un signal de repérage, représentatif du fonctionnement des différents cylindres d'un moteur à combustion interne à plusieurs cylindres, ce signal étant plus particulièrement destiné au pilotage d'un système d'injection électronique de carburant du type multipoint séquentielle.

L'invention concerne plus précisément un procédé pour générer un signal permettant le repérage de la position de chacun des différents cylindres dans le déroulement de leur cycle de fonctionnement et en particulier leur passage à la position Point Mort Haut admission afin de phaser précisément l'injection.

Dans le but d'améliorer le fonctionnement des moteurs à combustion interne tant du point de vue des performances que du point de vue de l'émission de polluants, de nombreux systèmes d'injection de carburant ont été développés. Parmi ceux-ci, on peut citer les systèmes d'injection indirecte multipoint à commande électronique, comme le système RENIX ou comme le système L(ou LH)-Jetronic commercialisé par la société BOSCH.

Une des caractéristiques importantes de l'injection électronique multipoint est son fonctionnement intermittent, les injecteurs sont en effet actionnés périodiquement : au moins une fois par cycle moteur, soit encore dans le cas d'un moteur à quatre temps une fois pendant deux tours vilebrequin ou 720° d'angle. Deux modes d'ouverture des injecteurs ont été développés : l'actionnement simultané et l'actionnement séquentiel.

L'injection simultanée, ou Full-Group, consiste à injecter la quantité de carburant, déterminée par le dispositif électronique de contrôle, en faisant fonctionner tous les injecteurs en même temps. L'actionnement des injecteurs peut s'opérer une fois par cycle (une injection tous les deux tours de vilebrequin) ou deux fois par cycle (une injection par tour de vilebrequin). Cette dernière solution simplifie l'organisation du dispositif électronique de contrôle qui pilote les injecteurs : un seul étage de commande est nécessaire.

Cependant le mode de fonctionnement Full-Group présente l'inconvénient d'injecter le carburant alors qu'il y a toujours une soupape d'admission en position ouverte. Or l'expérience montre que l'injection quand il y a une soupape ouverte n'est pas souhaitable parce qu'elle entraîne une augmentation des émissions de polluants : le carburant injecté vient mouiller la bougie et provoque une mauvaise initiation de la combustion.

L'injection séquentielle consiste à injecter la quantité de carburant en actionnant successivement et dans un ordre donné, les différents injecteurs de façon à injecter dans chaque cylindre au mieux par rapport à la phase d'admission correspondante. L'injection séquentielle est phasée lorsque la phase d'ouverture de chaque injecteur se termine avant l'ouverture de la soupape d'admission du cylindre correspondant.

L'injection séquentielle phasée donne d'excellents résultats en terme de dépollution. En effet, l'injection séquentielle phasée permet, en contrôlant précisément l'instant d'injection cylindre par cylindre, de supprimer dans la quasi totalité des conditions de fonctionnement du moteur, l'injection directe du carburant dans un cylindre par la soupape ouverte.

Toutefois les systèmes d'injection électronique multipoint du type séquentielle phasée, présentent l'inconvénient d'engendrer un surcoût important par rapport à une installation classique d'injection électronique de type "Full Group" où tous les injecteurs sont activés simultanément.

En effet, les systèmes de type séquentielle phasée ont notamment besoin de disposer de moyens de repérage très précis du déroulement du cycle moteur dans chacun des cylindres, pour permettre à la centrale électronique de contrôle moteur de calculer et de commander le débit de chaque injecteur à un moment adéquat prédéterminé, en dehors de la période d'ouverture de la soupape correspondante.

Il est d'usage, comme cela est divulgué dans la demande de brevet français FR-A-2.441.829, de repérer, sur un disque (ou cible) solidaire du vilebrequin, les zones de position angulaire correspondantes à une phase déterminée de la course des différents pistons. Le disque présente des éléments de repérage disposés le long de sa périphérie, telles que des dents de longueur différente, et qui en passant devant un organe récepteur fixe, génèrent des impulsions électriques permettant de produire un signal repérant le passage à la position Point Mort Haut d'un piston déterminé.

Un tel dispositif de repérage s'avère toutefois insuffisant pour effectuer le pilotage d'une injection séquentielle phasée.

En effet, pour un moteur à combustion interne à quatre temps, le vilebrequin exécute deux tours complets (ou 720° d'angle), avant qu'un piston donné se retrouve dans la même position de fonctionnement dans le cycle moteur. Il en résulte qu'à partir de la seule observation de la rotation de la cible solidaire du vilebrequin, il n'est, à priori, pas possible de fournir une information sur chaque cylindre sans une indétermination de deux temps moteur dans le cycle (le repérage de la position Point Mort Haut recouvrant aussi bien la phase admission que la phase explosion).

La détermination précise de la position de chaque cylindre dans le cycle ne pouvant être déduit de la seule rotation du vilebrequin, la recherche d'informations complémentaires est donc nécessaire pour savoir si le cylindre est dans la première ou dans la seconde moitié du cycle moteur (phases admission puis compression durant le premier tour vilebrequin, phases explosion et détente lors du second tour).

Afin d'obtenir de telles informations complémentaires, on utilise classiquement des éléments de repérage portés par un disque émetteur qui tourne deux fois moins vite que le vilebrequin. A cet effet on peut disposer ce disque émetteur sur l'arbre à cames ou bien sur l'arbre du répartiteur d'allumage qui est entraîné par l'intermédiaire d'un réducteur de rapport 1/2 à partir du vilebrequin.

Classiquement donc, l'arbre à cames (ou encore la poulie d'entraînement de l'arbre à cames) est équipé d'une cible portant un repère qui coopère avec un capteur fixe pour délivrer un signal fréquentiel valant "1" pendant la première moitié du cycle et "0" pendant la seconde moitié. C'est la combinaison des signaux issus du capteur vilebrequin et du capteur arbre à cames qui permet au système de piloter une injection séquentielle phasée.

De tels systèmes de repérage angulaire utilisant à la fois un capteur vilebrequin et un capteur arbre à cames sont relativement encombrants, coûteux et d'un montage délicat. En outre, dans le cas où l'un des capteurs tombe en panne, c'est-à-dire en mode de fonctionnement dégradé du moteur, les systèmes de mesure classiques ne permettent pas de fournir suffisamment d'informations au système de pilotage de l'injection électronique du moteur, d'où un risque de dérèglement de cette dernière.

La présente invention a pour objet de pallier aux inconvénients des systèmes de repérage connus, nécessaires à la mise en oeuvre des systèmes d'injection séquentielle phasée, proposant un procédé de repérage simple et efficace qui ne nécessite aucun capteur de position spécifique.

Le procédé pour produire un signal de repérage cylindres, selon l'invention, concerne le pilotage d'une injection multipoint du type séquentielle phasée, pour un moteur à combustion interne multicylindre. Ce signal permet pour chaque cylindre, le repérage d'un instant précis du déroulement du cycle moteur comme le Point Mort Haut admission ou le Point Mort Haut explosion. Le moteur comporte d'une part une couronne dentée solidaire du vilebrequin qui coopère avec au moins un capteur pour fournir un signal permettant le repérage des passages au Point Mort Haut des différents cylindres du moteur et d'autre part un système de détection des ratés de combustion apte à fournir un signal permettant le repérage des ratés de combustion survenant dans les différents cylindres.

Selon l'invention le procédé pour produire un signal de repérage cylindres se caractérise par les étapes suivantes :
- arrêt de l'injection du carburant pour un cylindre donné de référence du moteur à un instant précis et pendant une période donnée ;
- observation, grâce au signal de détection des ratés de combustion, de la survenue d'un raté pour le cylindre de référence suite à la non injection et de l'instant de détection du raté ;
- calcul du nombre de Points Morts Hauts séparant l'instant d'arrêt de l'injection pour le cylindre de référence et l'instant de détection du raté de combustion qui résulte de cet arrêt et identification par déduction, de l'instant de passage au Point Mort Haut admission ou explosion du cylindre de référence ;
- élaboration du signal de repérage cylindres, ce dernier, en phase avec le signal Point Mort Haut, étant initialisé à l'instant de passage du Point Mort Haut admission ou explosion du cylindre de référence et reprenant l'ordre de succession des combustions dans les cylindres.

Selon une autre caractéristique du procédé pour produire un signal de repérage cylindres objet de l'invention, l'arrêt de l'injection pour le cylindre de référence survient après l'accomplissement d'un nombre entier de cycles moteur comptés à partir du premier passage au Point Mort Haut.

Selon une autre caractéristique du procédé pour produire un signal de repérage cylindres objet de l'invention, la durée d'arrêt de l'injection pour le cylindre de référence est d'un cycle moteur.

Selon une autre caractéristique du procédé pour produire un signal de repérage cylindres selon l'invention, l'étape d'identification consiste à analyser le nombre de Points Morts Hauts séparant l'instant d'arrêt de l'injection du cylindre de référence et l'instant de détection. Ce nombre de Points Morts Hauts est directement lié à la position du cylindre de référence dans le cycle lors de l'instant d'arrêt de l'injection à savoir Point Mort Haut admission ou Point Mort Haut explosion.

Selon une autre caractéristique du procédé, le signal de repérage cylindres est généré dès le lancement du moteur, en phase avec le signal Point Mort Haut. Le signal de repérage cylindre est alors initialisé arbitrairement Point Mort Haut admission ou explosion, lors du premier passage au Point Mort Haut du cylindre de référence.

Selon une autre caractéristique du procédé de repérage cylindres selon l'invention, l'étape d'élaboration du signal consiste à vérifier si ce signal émis dès le lancement du moteur correspond à la réalité du déroulement du cycle moteur dans les cylindres et à réinitialiser ce signal, si le choix arbitraire initial est erroné.

On comprendra mieux les buts, aspects et avantages de la présente invention, d'après la description donnée ci-après d'un mode de réalisation de l'invention appliqué à un moteur quatre temps et quatre cylindres, ce mode de réalisation étant donné à titre d'exemple non limitatif, en se référant au dessin annexé, dans lequel :
la figure 1 est un schéma structurel du dispositif de contrôle moteur intégrant le procédé objet de la présente invention ;
la figure 2 présente les différents chronogrammes caractérisant le procédé objet de la présente invention ;
la figure 3 est un bloc diagramme détaillant les différentes étapes du procédé objet de l'invention.

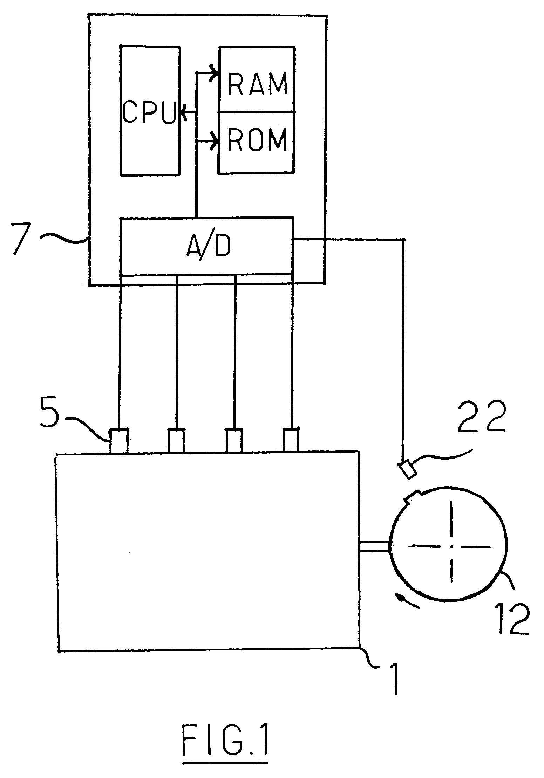

La figure 1 précise la configuration d'un système de contrôle moteur mettant en oeuvre le procédé de repérage cylindres selon la présente invention. Seules les parties constitutives nécessaires à la compréhension de l'invention ont été figurées.

Le moteur à combustion interne du type quatre temps et à quatre cylindres en ligne, référencé 1, est équipé d'un dispositif d'injection multipoint par lequel chaque cylindre est alimenté en carburant par un électro-injecteur 5 spécifique. L'ouverture ou l'actionnement séquentiel de chaque électro-injecteur 5 est commandé par un système de contrôle moteur 7, qui détermine la quantité de carburant injectée suivant les conditions de fonctionnement.

Le système de contrôle moteur 7 comprend classiquement un calculateur comportant une CPU, une mémoire vive (RAM), une mémoire morte (ROM), des convertisseurs analogiques-numériques (A/D), et différentes interfaces d'entrées et de sorties. Ce système de contrôle moteur reçoit des signaux d'entrée, effectue des opérations et génère des signaux de sortie à destination notamment des injecteurs.

Parmi les signaux d'entrée, figurent notamment ceux émis par un capteur vilebrequin 22 pour synchroniser les instants d'injection avec le fonctionnement du moteur.

Ce capteur 22, du type par exemple à réluctance variable, qui est monté fixe sur le bâti du moteur, est associé à une couronne de mesure 12, solidaire du volant d'inertie et comportant un certain nombre de repères. Le capteur 22 délivre un signal Dn représentatif du défilement des dents portées par la couronne et plus particulièrement de la vitesse de défilement de ces dents, c'est-à-dire représentative de la vitesse instantanée du volant. Ce signal Dn, de fréquence proportionnelle à la vitesse de défilement des dents de la couronne 12, est traité par des moyens décrits ci-après pour produire un signal DETEC de détection des ratés de combustion et un signal PMH repérant le passage à la position Point Mort Haut des cylindres des différents cylindres. L'existence d'un repère particulier, du type dent manquante porté par la couronne 12, permet d'identifier le passage au Point Mort Haut des cylindres n°1 et n°4 d'une part et des cylindres n°2 et n°3 d'autre part (l'ordre d'allumage étant classiquement du type 1-3-4-2).

Il est à noter que dans l'exemple représenté d'un moteur quatre temps à quatre cylindres en ligne, présentant un ordre d'allumage selon la séquence 1-3-4-2, les cylindres n°1 et n°4 (ou n°2 et n°3) passent simultanément à la position Point Mort Haut mais à des phases différérentes du cycle moteur, l'un étant alors en phase admission et l'autre en phase explosion.

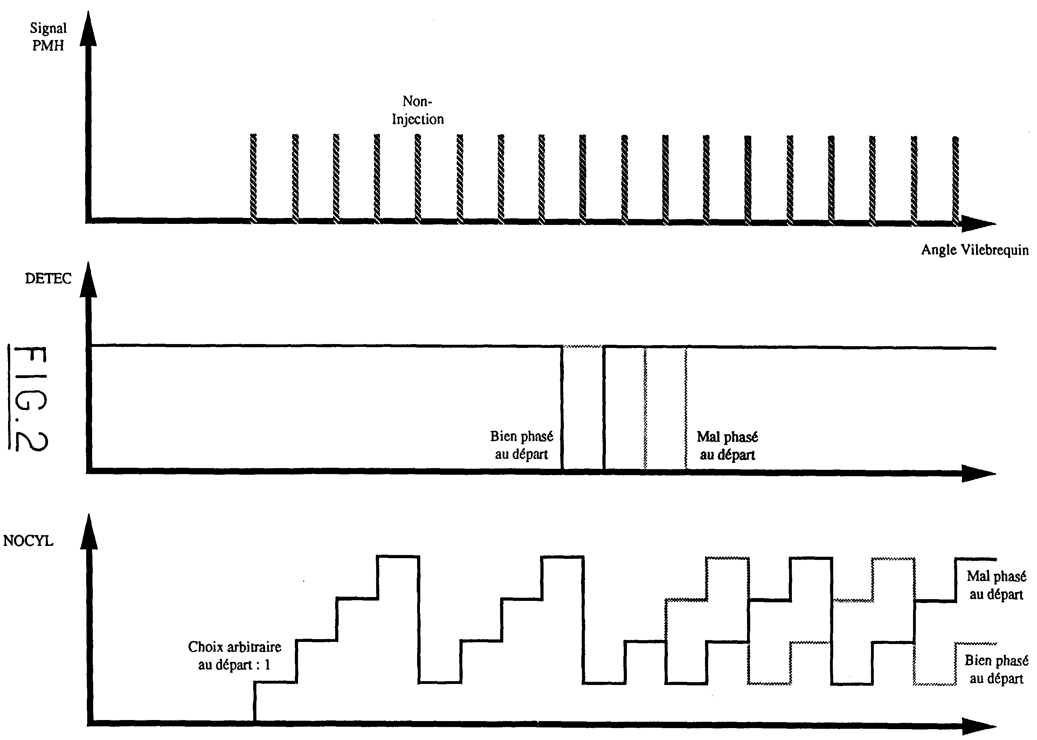

Conformément à la figure 2, le principe du procédé de repérage du déroulement du cycle de travail dans chacun des cylindres du moteur selon l'invention est alors le suivant. Le signal Dn émis dès le lancement du moteur par le capteur 22 et notamment le signal dérivé PMH permet de procéder au pilotage des injecteurs grâce aux repérages des Points Morts Hauts de chacun des cylindres. Pour cela, on utilise un signal NOCYL synchronisé avec le signal PMH et fournissant le repérage des Points Morts Hauts admission des différents cylindres. Ce signal NOCYL est arbitrairement initialisé à 1, à la première détection du passage au Point Mort Haut des cylindres n°1 et n°4, puis il est incrémenté (modulo quatre) à chaque Point Mort Haut.

Compte tenu du choix arbitraire effectué lors de l'initialisation du signal NOCYL, deux possibilités s'offrent : soit le signal NOCYL est bien phasé, le Point Mort Haut de référence ayant servi à l'initialisation du signal correspondant bien à un Point Mort Haut admission du cylindre n°1, soit le signal NOCYL est mal phasé, le Point Mort Haut de référence correspondant à un Point Mort Haut admission du cylindre n°4.

Pour lever cette indétermination, le moteur ayant été lancé et fonctionnant depuis un certain nombre de cycles, on provoque volontairement un raté de combustion sur un cylindre de référence, à savoir le cylindre n°1, en stoppant l'injection de carburant sur ce cylindre pendant toute la durée d'un cycle moteur.

L'étape suivante consiste alors à repérer grâce aux moyens de détection mis en oeuvre et notamment grâce au signal DETEC, l'instant de survenue du raté de combustion, on en déduit alors par analyse du nombre de Points Morts Hauts survenus entre les instants d'arrêt de l'injection et de détection du raté, le passage au Point Mort Haut admission du cylindre n°1.

Cette reconnaissance du Point Mort Haut admission du cylindre n°1 ayant eu lieu, on corrige ou non le signal NOCYL pour permettre le repérage des Points Morts Hauts admission des différents cylindres repérage nécessaire à l'injection séquentielle phasée.

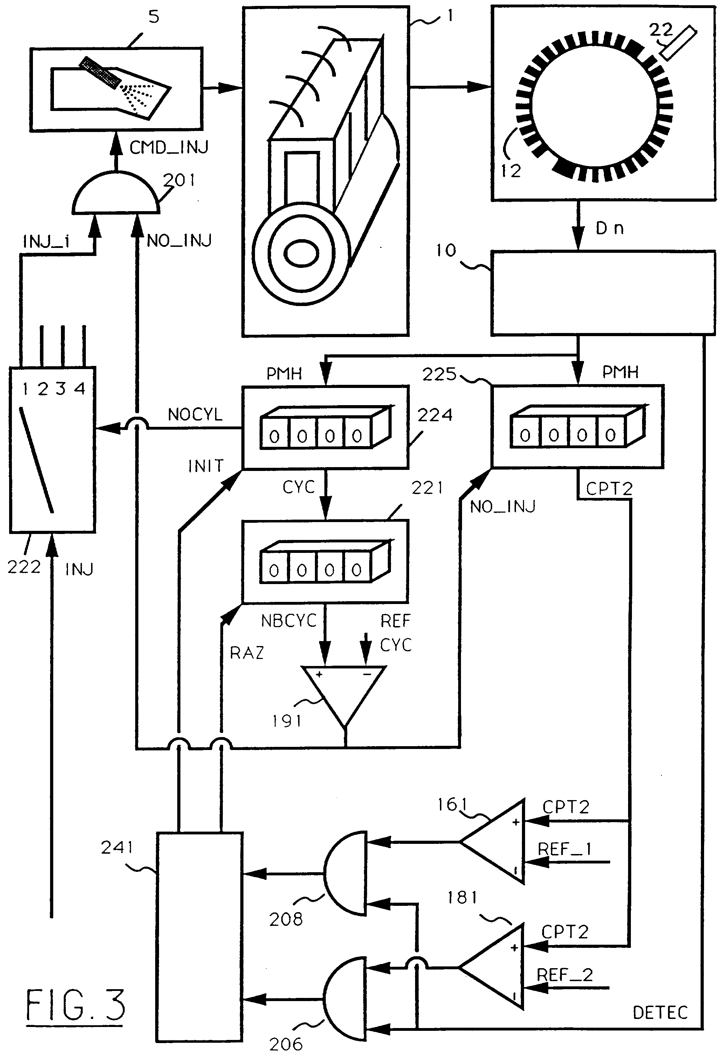

La figure 3 décrit par un schéma fonctionnel de type analogique, les différents éléments constitutifs d'un mode de réalisation du procédé selon l'invention.

Le moteur 1 est donc équipé d'un capteur 22 monté fixe sur le bâti du moteur, ce capteur est associé à une couronne de mesure dentée 12, solidaire du volant d'inertie. La couronne 12 comporte à sa périphérie cinquante huit dents identiques, qui sont séparées par une dent de référence, qui a une largeur triple de celle des autres dents. Cette dent permet le repérage de la position Point Mort Haut des cylindres n°1 et n°4 d'une part et des cylindres n°2 et n°3 d'autre part.

Le capteur 22 délivre un premier signal Dn représentatif de la rotation de la couronne 22. On en déduit par l'intermédiaire d'un système de traitement du signal 10, un signal PMH caractéristique du passage à la position Point Mort Haut des différents cylindres. Ce signal PMH présente un front montant à chaque passage de la dent de référence (position Point Mort Haut des cylindres n°1 et n°4) ainsi qu'au passage de la trentième dent suivant la dent de référence (position Point Mort Haut des cylindres n°2 et n°3), cette trentième dent étant située à l'opposé diamétralement de la dent de référence.

Ce signal PMH alimente un compteur logiciel 244 de type modulo 4 qui s'incrémente à chaque impulsion correspondant au passage d'un cylindre au Point Mort Haut. Lors du démarrage du moteur, le compteur 224 est initialisé, par des moyens adéquats à la valeur "1" dès la première impulsion du signal PMH correspondant au passage de la dent de référence devant le capteur 22.

L'objet de ce compteur 244 est de piloter l'injection en indiquant en permanence, pendant les phases de fonctionnement du moteur, le numéro de cylindre en phase admission. Pour ce faire, le compteur 224 délivre un signal NOCYL à destination de l'ensemble démultiplexeur 222 qui pilote les différents injecteurs 5.

Ce système démultiplexeur 222 a pour rôle de déterminer en fonction des signaux INJ (en provenance du bloc de calcul du calculateur d'injection en charge d'élaborer le temps d'injection pour chacun des cylindres à partir des conditions de fonctionnement du moteur) et NOCYL, l'injecteur à actionner et la durée d'injection. Le système démultiplexeur décode l'information NOCYL en fonction de l'ordre d'allumage qui est une donnée du moteur : ainsi, dans l'exemple de réalisation choisie la valeur "1" issue du compteur 224 est associée au cylindre n°1, la valeur "2" au cylindre n°3, la valeur "3" au cylindre n°4 et la valeur "4" au cylindre n°2.

Le compteur 224 génère par ailleurs un signal CYC caractéristique de chaque retour à l'état "1" pour un second compteur logiciel 221 qui compte ainsi le nombre de cycles complets du moteur. Ce compteur 221 est remis à "0" à chaque démarrage moteur par une commande appropriée.

Le contenu du compteur 221, NBCYC est traité par des moyens comparateurs 191 à une valeur de référence REFCYC prédéterminée (par exemple 100) pour produire un signal de commande NO-INJ. Cette valeur de référence REFCYC caractéristique du moteur est éventuellement susceptible d'évoluer suivant le fonctionnement du moteur.

Le signal NO-INJ a pour objet de bloquer le fonctionnement de l'injecteur correspondant au cylindre n°1, pris arbitrairement comme cylindre de référence, pendant un cycle, lorsque le compteur 221 a atteint la valeur REFCYC. Pour ce faire, la sortie à destination de l'injecteur n°1 du démultiplexeur 222 est reliée avec la sortie du comparateur 191 aux entrées d'une porte ET 201, la sortie de la porte ET 201 étant reliée à l'injecteur n°1.

Simultanément à la coupure de l'injecteur n°1, le signal NO-INJ engendre la mise en fonctionnement et l'initialisation d'un troisième compteur logiciel 225. Ce compteur est alimenté avec le signal PMH et s'incrémente donc à chaque impulsion correspondant au passage d'un cylindre au Point Mort Haut. L'initialisation du compteur 225 est opérée de façon à prendre la valeur "1" dès la première impulsion du signal PMH suivant l'ordre de mise en fonctionnement transmis par le signal NO-INJ.

L'information CPT2 contenue dans le compteur 225 est alors comparée à deux valeurs de référence REF-1 et REF-2 pour produire un signal de repérage détectant les instants de passage de deux nombres prédéterminés de Points Morts Hauts postérieurs à la décision de blocage de l'injecteur n°1.

Le contenu du compteur 225 est donc traité par des moyens comparateurs 161 et 181 aux valeurs prédéterminée REF-1 et REF-2 pour produire des signaux caractéristiques de l'état à REF-1 ou à REF-2 du compteur 225. Ces valeurs REF-1,REF-2 sont choisies pour l'exemple décrit, respectivement égales à "6" et à "8".

Ces signaux caractéristiques sont ensuite comparés avec un signal DETEC de repérage des ratés de combustion décrit ci-après, par un ensemble de portes logiques de façon à détecter la coïncidence entre le signal DETEC, et donc la survenue d'un raté de combustion, et l'état à "6" ou "8" du compteur 225, et suivant le résultat de cette comparaison le compteur 224 est réinitialisé ou non.

La comparaison avec le signal DETEC est opérée par deux portes "ET" 206 et 208 dont les entrées sont respectivement connectées au signal DETEC et à la sortie du comparateur 161 d'une part et au signal DETEC et à la sortie du comparateur 181 d'autre part. Les sorties des portes 206 et 208 sont ensuite connectées à un système 241 apte à analyser les signaux ainsi produits et à générer un signal INIT à destination du compteur 224 pour à modifier éventuellement le contenu de ce dernier.

L'obtention du signal DETEC est produit par traitement du signal Dn par l'intermédiaire d'un système de traitement du signal 10. Tout d'abord, le signal Dn est traité par des moyens de mesure adaptés pour produire une valeur du couple gaz engendrée par chacune des combustions du mélange gazeux dans les cylindres du moteur. Le couple gaz est notamment obtenu à partir de l'analyse de la raie quatre du spectre du signal Dn délivré par le capteur fixe 22 observant la roue dentée 12 solidaire du vilebrequin.

Les valeurs successives de couple gaz Cg, calculées après chaque combustion par les moyens de mesure, sont ensuite reprises par des moyens de détection de ratés combustion. Ces moyens de détection opèrent, à partir de chaque valeur de couple, le calcul d'une grandeur statistique représentative de la moyenne des valeurs de couple sur un nombre donné de combustions et compare la valeur de couple à une valeur de seuil déduite de la grandeur statistique pour produire un signal DETEC indiquant l'existence d'un raté de combustion quand la valeur de couple est inférieure à ladite valeur de seuil.

Ce signal DETEC présente ainsi après chaque combustion (avec un retard dû au procédé de traitement mis en oeuvre de deux temps moteur ou 360° vilebrequin) un niveau logique à 1 en cas de combustion et à 0 en cas de non-combustion.

Conformément à la description qui précède la mise en oeuvre du dispositif est alors la suivante.

Lors de la mise en marche du moteur, le compteur 224 est initialisé arbitrairement à "1" dès la première impulsion du signal PMH correspondant à la détection de la dent de référence. Ce choix arbitraire entraîne une indétermination : le cylindre 1 pouvant être au Point Mort Haut admission ou explosion. On utilise néanmoins directement le signal NOCYL pour piloter séquentiellement l'injection. Cette indétermination est toutefois prise en compte dans la loi de commande pour éviter toute injection, soupape d'admission ouverte.

Lorsque le moteur a tourné pendant un nombre entier de cycles prédéterminé égal à REFCYC, de façon à stabiliser le moteur, on bloque pendant la durée d'un cycle moteur l'injection du cylindre n°1 par le signal NO-INJ et simultanément on libère l'incrémentation à chaque Point Mort Haut du compteur 225 initialement à "1".

La décision de coupure de l'injection est donc bloquée alors que le cylindre n°1, se trouve au Point Mort Haut (l'incrémentation du compteur 221 étant opéré lors du retour à "1" du compteur 224 correspondant au passage de la dent 18 devant le capteur 22).

Deux cas peuvent alors se produire :
- soit le cylindre n°1 est effectivement en phase admission et l'absence d'explosion consécutivement à la non injection n'interviendra que six temps moteur après (ou six Points Morts Hauts repérés par le signal PMH) et n'apparaîtra sur DETEC que huit temps après, compte tenu du retard de détection de deux temps.
- soit le cylindre n°1 est en phase explosion et l'absence d'explosion consécutivement à la non injection n'interviendra que quatre temps moteur après (ou quatre Points Morts Hauts repérés par le signal PMH) et n'apparaîtra sur DETEC que six temps après, compte tenu du retard de détection de deux temps.

Il suffit donc de comparer, si la détection du raté de combustion provoqué coïncide avec la valeur "6" ou "8" du compteur 225 pour déduire la position exacte du cylindre n°1 et modifier en conséquence le compteur 224. Ainsi si la détection du raté de combustion coïncide avec la valeur "6", on en déduit que le cylindre n°1 était en phase explosion lors de la coupure de l'injection, on remplace alors la valeur 3 par la valeur 1 de façon que le compteur 224 fournisse l'information Point Mort Haut admission. Et si la détection du raté de combustion coïncide avec la valeur "8", on en déduit que le cylindre n°1 était en phase admission et donc que le compteur 224 fournit correctement l'information Point Mort Haut admission et donc qu'aucune modification de ce dernier n'est nécessaire.

Si le système détecte un raté de combustion à la fois à "6" et à "8", dans l'hypothèse d'un raté de combustion parasite survenu dans la fenêtre de détection, on réitère tout le processus de détection, par exemple en modifiant par des moyens adaptés la valeur REFCYC.

Le procédé de reconnaissance peut être complété par une procédure de surveillance qui permet de vérifier régulièrement si le compteur 224 présente une information exacte. Pour ce faire plusieurs solutions sont possibles, la plus simple consistant à disposer d'un compteur 221 de type modulo N, le repérage du Point Mort Haut admission du cylindre n°1 ayant alors lieu à nouveau tous les REFCYC + p*N cycles avec p = 1,2,3,4...

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

Ainsi on peut utiliser ce procédé avec un signal NOCYL de commande des injecteurs utilisant non plus le repérage des passages au Point Mort Haut admission des différents cylindres mais le repérage des passages au Point Mort Haut explosion. Dans ce cas, lorsque la détection du raté de combustion coïncide avec la valeur "6" on en déduit que le signal NOCYL est bien phasé et lorsque la détection du raté de combustion coïncide avec la valeur "8" on en déduit que le signal NOCYL est mal phasé"

Ainsi il est possible d'opérer la détection des ratés de combustion indépendamment de la mesure du couple gaz moyen, par exemple par simple observation de l'accélération de la couronne 12.

Pour ce qui est de la mise en oeuvre du dispositif de détection des ratés de combustion, quelque soit le mode de réalisation choisi, elle peut être réalisée sous diverses formes :
- soit avec des composants d'électronique analogique pour lesquels les sommateurs, comparateurs et autres filtres sont réalisés à l'aide d'amplificateurs opérationnels ;
- soit avec des composants d'électronique numérique qui réaliseraient la fonction en logique câblée ;
- soit par un algorithme de traitement du signal implanté sous forme d'un module logiciel composant d'un système logiciel de contrôle moteur faisant fonctionner le microcontrôleur d'un calculateur électronique.
- soit encore, par une puce spécifique (custom) dont les ressources matériel et logiciel auront été optimisées pour réaliser les fonctions objet de l'invention : puce microprogrammable ou non, encapsulée séparément ou bien tout ou partie d'un coprocesseur implanté dans un microcontrôleur ou microprocesseur etc.

## Revendications

1. Procédé pour produire un signal de repérage cylindres NOCYL pour piloter une injection multipoint du type séquentielle phasée équipant un moteur à combustion interne multicylindre (1), ce signal permettant notamment, dans l'accomplissement de deux révolutions successives du vilebrequin, le repérage d'un instant précis du déroulement du cycle moteur pour chacun des cylindres comme le Point Mort Haut admission ou le Point Mort Haut explosion, ledit moteur comportant d'une part une couronne dentée (12) solidaire du vilebrequin coopèrant avec au moins un capteur (22) pour fournir un signal PMH de repérage des passages au Point Mort Haut des différents cylindres du moteur et d'autre part un système de détection des ratés de combustion (10) apte à fournir un signal DETEC de repérage des ratés de combustion dans les différents cylindres, caractérisé en ce qu'il comprend les étapes suivantes :
- arrêt de l'injection du carburant pour un cylindre donné de référence (n°1) du moteur à un instant précis (REFCYC) et pendant une période donnée ;
- observation, grâce audit signal DETEC de détection des ratés de combustion, de la survenue d'un raté pour ledit cylindre de référence (n°1) suite à la non injection et de l'instant de détection dudit raté ;
- calcul du nombre total de Points Morts Hauts identifiés par le signal PMH entre l'instant d'arrêt de l'injection pour le cylindre de référence (n°1) et l'instant de détection du raté de combustion qui en résulte et identification par déduction de l'instant de passage au Point Mort Haut admission ou explosion du cylindre de référence (n°1) ;
- élaboration du signal de repérage cylindres NOCYL, ce dernier, en phase avec le signal PMH, étant initialisé à l'instant de passage du Point Mort Haut admission ou explosion du cylindre de référence (n°1) et reprenant l'ordre de succession des combustions dans les cylindres.

2. Procédé pour produire un signal de repérage cylindres suivant la revendication 1, caractérisé en ce que l'arrêt de l'injection pour le cylindre de référence (n°1) survient après un nombre entier (REFCYC) de cycles moteur comptés à partir du premier passage au Point Mort Haut repéré par ledit signal PMH.

3. Procédé pour produire un signal de repérage cylindres suivant l'une quelconque des revendications 1 à 2, caractérisé en ce que la durée d'arrêt de l'injection pour le cylindre de référence (n°1) est d'un cycle moteur.

4. Procédé pour produire un signal de repérage cylindres suivant l'une quelconque des revendications 1 à 3, caractérisé en ce que ladite étape d'identification consiste à comparer le nombre de Points Morts Hauts entre l'instant d'arrêt de l'injection du cylindre de référence et l'instant de détection à deux nombres prédéterminés (REF-1, REF-2) correspondant respectivement à la position du cylindre de référence dans le cycle lors de l'instant d'arrêt de l'injection à savoir Point Mort Haut admission ou Point Mort Haut explosion.

5. Procédé pour produire un signal de repérage cylindres suivant l'une quelconque des revendications 1 à 4, caractérisé en ce que le signal NOCYL est généré dès le lancement du moteur, ledit signal NOCYL, en phase avec le signal PMH, étant initialisé arbitrairement Point Mort Haut admission ou explosion, lors du premier passage au Point Mort Haut du cylindre de référence (n°1).

6. Procédé pour produire un signal de repérage cylindres suivant la revendication 5, caractérisé en ce que ladite étape d'élaboration du signal NOCYL consiste à vérifier si le signal NOCYL émis dès le lancement du moteur correspond à la réalité du déroulement du cycle moteur dans les cylindres et à réinitialiser ce signal NOCYL, si le choix arbitraire initial est erroné.

## Patentansprüche

1. Vefahren zum Erzeugen eines Zylinder-Identifikationssignals NOCYL zur Steuerung einer phasengesteuerten sequentiellen Mehrstellen-Einspritzung, die in einem Mehrzylinder-Verbrennungsmotor (1) eingebaut ist, wobei das Signal es insbesondere ermöglicht, bei der Durchführung zweier aufeinanderfolgender Umdrehungen der Kurbelwelle einen genauen Zeitpunkt des Ablaufs des Motorzyklus für jeden der Zylinder zu identifizieren, wie zum Beispiel den oberen Einlaßtotpunkt oder den oberen Explosionstotpunkt, wobei der Motor einerseits einen mit der Kurbelwelle einstückigen Zahnring (12) aufweist, der mit mindestens einem Sensor (22) zusammenwirkt, um ein Signal PMH zur Identifikation der Durchtritte der unterschiedlichen Zylinder des Motors durch den oberen Totpunkt abzugeben, und andererseits ein System zur Erfassung der Fehlverbrennungen (10) aufweist, das ein Signal DETEC zur Identifikation der Fehlverbrennungen in den unterschiedlichen Zylindern abgeben kann, **dadurch gekennzeichnet**, daß es die folgenden Schritte aufweist:
- Anhalten der Einspritzung von Brennstoff für einen gegebenen Bezugszylinder (Nr. 1) des Motors zu einem genauen Zeitpunkt (REFCYC) und während einer gegebenen Zeitdauer;
- Beobachten des Auftretens einer Fehlverbrennung für den Bezugszylinder (Nr. 1) infolge der Nicht-Einspritzung sowie des Zeitpunkts der Erfassung der Fehlverbrennung mittels des Signals DETEC zur Erfassung der Fehlverbrennungen;
- Berechnen der Anzahl oberer Totpunkte, die durch das Signal PMH dargestellt wird, zwischen dem Zeitpunkt des Anhaltens der Einspritzung für den Bezugszylinder (Nr. 1) und dem Zeitpunkt der Erfassung der Fehlverbrennung trennen, die sich aus diesem Anhalten ergibt, und Identifikation des Zeitpunkts des Durchtritts durch den oberen Einlaßtotpunkt oder Explosionstotpunkt des Bezugszylinders (Nr. 1) durch Ableitung;
- Erstellen des Zylinder-Identifikationssignals (NOCYL), welches phasengleich mit dem Signal (PMM) des oberen Totpunkts ist und zum Zeitpunkt des Durchtritts des Bezugszylinders (Nr. 1) durch den oberen Einlaßtotpunkt oder Explosionstotpunkt initialisiert wird, wobei es die Reihenfolge der Verbrennungen in den Zylindern wiederaufnimmt.

2. Verfahren zum Erzeugen eines Zylinder-ldentifikationssignals nach Anspruch 1, **dadurch gekennzeichnet**, daß das Anhalten der Einspritzung für den Bezugszylinder (Nr. 1) ) nach einer ganzzahligen Zahl (REFCYC) von Motorzyklen stattfindet, die von dem ersten Durchtritt des Signals PMH durch den identifizierten oberen Totpunkt gezählt werden.

3. Verfahren zum Erzeugen eines Zylinder-Identifikationssignals nach einem der Ansprüche 1 bis 2, **dadurch gekennzeichnet**, daß die Dauer des Anhaltens der Einspritzung für den Bezugszylinder (Nr. 1 ) ein Motorzyklus ist.

4. Verfahren zum Erzeugen eines Zylinder-Identifikationssignals nach einem der Ansprüche 1 bis 3, **dadurch gekennzeichnet**, daß der Identifikationsschritt darin besteht, die Anzahl oberer Totpunkte zwischen dem Zeitpunkt des Anhaltens der Einspritzung des Bezugszylinders und dem Zeitpunkt der Erfassung mit zwei vorbestimmten Zahlen (REF-1, REF-2) zu vergleichen, die der Position des Bezugszylinders zu dem Zeitpunkt des Anhaltens der Einspritzung jeweils entsprechen, d.h. dem oberen Einlaßtotpunkt oder dem oberen Explosionstotpunkt.

5. Verfahren zum Erzeugen eines Zylinder-Identifikationssignals nach einem der Ansprüche 1 bis 4, **dadurch gekennzeichnet**, daß das Signal NOCYL sofort mit dem Anlassen des Motors erzeugt wird, wobei das Signal NOCYL, das mit dem Signal PMH phasengleich ist, willkürlich als oberer Einlaßtotpunkt oder Explosionstotpunkt bei dem ersten Durchtritt des Bezugszylinders (Nr. 1) durch den oberen Totpunkt initialisiert wird.

6. Verfahren zum Erzeugen eines Zylinder-Identifikationssignals nach Anspruch 5, **dadurch gekennzeichnet**, daß der Schritt zur Erstellung des Signals NOCYL darin besteht, zu überprüfen, ob das seit dem Anlassen des Motors ausgesandte Signal NOCYL dem wirklichen Ablauf des Motorzyklus in den Zylindern entspricht, und dieses Signal NOCYL erneut zu initialisieren, wenn die anfängliche willkürliche Auswahl fehlerhaft ist.

## Claims

1. A method of producing a cylinder identification signal NOCYL for controlling a multi-point injection system of the phased sequential type on a multi-cylinder internal combustion engine (1), said signal making it possible in particular in the execution of two successive revolutions of the crankshaft to identify a precise moment in the performance of the engine cycle for each of the cylinders such as induction top dead centre or combustion top dead centre, said engine comprising on the one hand a toothed ring (12) which is fixed with respect to the crankshaft and cooperating with at least one sensor (22) for supplying a signal TDC for identifying the passages through the top dead centre position of the different cylinders of the engine and on the other hand a system for detecting combustion misfires (10) which is operable to supply a signal DETEC for identifying combustion misfires in the different cylinders, characterised in that it comprises the following steps:
- stoppage of the injection of fuel for a given reference cylinder (No 1) of the engine at a precise moment (REFCYC) and for a given period;
- observation, by virtue of said signal DETEC of detection of combustion misfires, of the occurrence of a misfire for said reference cylinder (No 1) following the non-injection and the moment of detection of said misfire;
- calculation of the total number of top dead centre positions identified by the signal TDC between the moment of stoppage of injection for the reference cylinder (No 1) and the moment of detection of the combustion misfire which results therefrom and identification by deduction of the moment of passage through the induction or combustion top dead centre position of the reference cylinder (No 1); and
- production of the cylinder identification signal NOCYL, the latter, in phase with the signal TDC, being initialised at the moment of passing through the induction or combustion top dead centre position of the reference cylinder (No 1) and resuming the order of succession of combustions in the cylinders.

2. A method of producing a cylinder identification signal according to claim 1 characterised in that stoppage of injection for the reference cylinder (No 1) occurs after a whole number (REFCYC) of engine cycles which are counted from the first passage through top dead centre identified by said signal TDC.

3. A method of producing a cylinder identification signal according to either one of claims 1 and 2 characterised in that the duration for which injection for the reference cylinder (No 1) is stopped is that of an engine cycle.

4. A method of producing a cylinder identification signal according to any one of claims 1 to 3 characterised in that said identification step comprises comparing the number of top dead centres between the moment of stopping injection for the reference cylinder and the moment of detection at two predetermined numbers (REF-1, REF-2) respectively corresponding to the position of the reference cylinder in the cycle at the moment at which injection is stopped, namely induction top dead centre or combustion top dead centre.

5. A method of producing a cylinder identification signal according to any one of claims 1 to 4 characterised in that the signal NOCYL is generated as from startingof the engine, said signal NOCYL, in phase with the signal TDC, being arbitrarily initialised induction or combustion top dead centre upon the first passage through the top dead centre position of the reference cylinder (No 1).

6. A method of producing a cylinder identification signal according to claim 5 characterised in that said step of producing the signal NOCYL comprises checking if the signal NOCYL emitted from starting of the engine corresponds to the reality of performance of the engine cycle in the cylinders and re-initialising said signal NOCYL if the initial arbitrary choice is wrong.
